# EUROPEAN PATENT APPLICATION

(11) **EP 3 040 146 A1**
(43) Date of publication of application: **06.07.2016**
(21) Application number: 14839052.9
(22) Date of filing: 20.08.2014
(51) Int. Cl.: B23C 5/28, B23C 5/10

(54) **END MILL WITH COOLANT HOLE**

(30) Priority: 30.08.2013 JP 2013179985
(71) Applicant: Mitsubishi Materials Corporation, Chiyoda-ku Tokyo 100-8117 (JP)
(72) Inventor: FUKATA Koji, Akashi-shi Hyogo 674-0071 (JP)
(74) Representative: Hoffmann Eitle
(86) International application number: PCT/JP2014/071735
(87) International publication number: WO 2015/029850

(57) **Abstract**

The discharge performance of chips generated by end cutting edges adjacent to a backward side of a long end cutting edge in a rotational direction of an end mill is improved. End cutting edges (9) are formed at intersecting ridgeline portions between tip flank faces (8) and gashes (7) at the tips of a plurality of chip discharge grooves (4) that are formed in an end mill body (1). At least one of the end cutting edges (9) is a long end cutting edge (9A) that extends further toward an inner peripheral side than the other end cutting edges (9B, 9C). Coolant holes (10) are formed between the chip discharge grooves (4) within the end mill body (1). The interval, in a tip view in the direction of an axis (O), between the long end cutting edge (9A) and an opening of a first coolant hole (10A) that opens at the backward side thereof in the rotational direction (T) of the end mill is made greater than the interval, in the tip view in the direction of the axis (O), between a second end cutting edge (9B) adjacent to the backward side of the long end cutting edge (9A) in the rotational direction (T) of the end mill and an opening of a second coolant hole (10B) that opens at the backward side thereof in the rotational direction (T) of the end mill.

## Description

### Technical Field

The present invention relates to an end mill with coolant holes in which a plurality of peripheral cutting edges and end cutting edges are formed at a tip portion of an end mill body, and a plurality of coolant holes are formed within the end mill body and open at the tip of the end mill body.

### Background Art

As an end mill with coolant holes equipped with such a plurality of peripheral cutting edges and end cutting edges and a plurality of coolant holes, for example, PTL 1 suggests the following four-cutting-edge ball end mill. In this end mill, coolant holes (fluid supply holes) open at tip flank faces of two end cutting edges among four end cutting edges (tip cutting edges) of the ball end mill, whereas in order to equally supply the coolant (fluid) to all the end cutting edges, the end cutting edges are formed at the tip portion along three or four chip discharge grooves (helical gashes), and coolant holes with a lead equal to that of the chip discharge grooves extend within the end mill body and respectively open at the tip flank faces of the end cutting edges.

Additionally, PTL 2 also describes an end mill with coolant holes and four unequal end cutting edges. The end mill has a pair of long end cutting edges provided up to the vicinity of an axial center along a pair of first gashes symmetrically formed with respect to the axial center, and a pair of short end cutting edges provided along second gashes formed so as to reach the first gashes from an outer peripheral portion symmetrically with respect to the axial center at the positions of 90° from the pair of long end cutting edges around the axial center. The end mill also has fluid supply holes (coolant holes) which have a pair of openings that open at flank faces of the pair of long end cutting edges and which are provided to longitudinally pass through the end mill, and a pair of communication grooves provided so as to increase the communication area of the first gash and the second gash where ends on the side of the axial center intersect each other and so as to connect intersecting portions between the first gash and the second gash and openings of the coolant holes.

### Citation List

### Patent Literature

[PTL 1] Japanese Registered Utility Model No. 3025383
[PTL 2] Japanese Patent No. 4409665

### Summary of Invention

### Technical Problem

However, when the long end cutting edge and the short end cutting edge are alternately formed in the circumferential direction at the tip portion of the end mill body as in the end cutting edges as described in PTL 2, the second gash in which the short end cutting edge adjacent to a backward side of the long end cutting edge in the rotational direction of the end mill is formed cannot help but be formed only up to a position away from the axial center in order for the long end cutting edge to extend up to the vicinity of the axial center. For this reason, the size of a pocket for discharging chips generated by the second gash also cannot help but be limited, and there is an existing concern that chip clogging is apt to occur in the second gash even if the communication grooves are provided so as to connect the opening of the intersecting portion between the first gash and the second gash and the coolant holes as described in PTL 2 or even if the coolant holes of the same number as that of the chip discharge grooves are formed in the end mill body, for example, as described in PTL 1.

The invention has been made under such a background, and an object thereof is to provide an end mill with coolant holes capable of improving the discharge performance of chips generated by end cutting edges adjacent to a backward side of a long end cutting edge in a rotational direction of an end mill and preventing chip clogging to perform stable cutting work, in the end mill in which a tip portion of an end mill body is formed with the long end cutting edge extending further toward an inner peripheral side of the end mill body than the other end cutting edges.

### Solution to Problem

In order to solve the above problems and to achieve the above object, the invention provides an end mill with coolant holes, in which a tip portion of an end mill body rotated around an axis is a cutting edge part. A plurality of chip discharge grooves twisted to a backward side in a rotational direction of the end mill toward a rear end side in a direction of the axis are formed at predetermined intervals in a circumferential direction at an outer periphery of the cutting edge part. Peripheral cutting edges are respectively formed at outer-peripheral-side ridge portions of wall faces of the chip discharge grooves that face in the rotational direction of the end mill, and gashes are formed at tip portions of the chip discharge grooves. End cutting edges extending from tips of the peripheral cutting edges to an inner peripheral side of the end mill body are respectively formed at intersecting ridgeline portions between wall faces of the gashes that face in the rotational direction of the end mill and tip flank faces of the end mill body. At least one first end cutting edge of the end cutting edges is a long end cutting edge that extends further toward the inner peripheral side of the end mill body than a second end cutting edge adjacent to the backward side of the first end cutting edge in the rotational direction of the end mill. Coolant holes, which extend so as to be twisted in the same direction of the chip discharge grooves and open at the tip of the end mill body, are formed between the chip discharge grooves adjacent to each other in the circumferential direction within the end mill body. The interval, in a tip view in the direction of the axis, between the first end cutting edge and an opening of a first coolant hole that opens at the backward side of the first end cutting edge in the rotational direction of the end mill is made greater than the interval, in the tip view in the direction of the axis, between the second end cutting edge and an opening of a second coolant hole that opens at the backward side of the second end cutting edge in the rotational direction of the end mill.

In the end mill with coolant holes configured this way, the interval, in the tip view in the direction of the axis, between the first end cutting edge that is the long end cutting edge and the opening of the first coolant hole that opens at the backward side thereof in the rotational direction of the end mill is made greater than the interval, in the tip view in the direction of the axis, between the second end cutting edge adjacent to the backward side of the first end cutting edge in the rotational direction of the end mill and the opening of the second coolant hole that opens at the backward side thereof in the rotational direction of the end mill. Thus, the opening of the first coolant hole can be formed close to the gash in which the second end cutting edge is formed.

Therefore, a coolant can be efficiently supplied toward the gash in which the second end cutting edge is formed from the first coolant hole. Thus, even if the size of the gash in which the second end cutting edge is formed on the backward side of the first end cutting edge in the rotational direction of the end mill cannot help but be limited in order to form the first end cutting edge as the long end cutting edge so as to extend further toward the inner peripheral side of the end mill body, chips generated by the second end cutting edge can be pushed out to the chip discharge grooves without causing clogging, and can be reliably discharged.

Meanwhile, in this way, when the interval, in the tip view in the direction of the axis, between the first end cutting edge and the opening of the first coolant hole that opens at the backward side thereof in the rotational direction of the end mill is made greater than the interval, in the tip view in the direction of the axis, between the second end cutting edge and the opening of the second coolant hole that opens at the backward side thereof in the rotational direction of the end mill, there is a concern that the first coolant hole is greatly biased to the chip discharge groove side connected to the gash in which the second end cutting edge is formed, and extends to the rear end side of the end mill body, in the section orthogonal to the axis of the cutting edge part, for example if the chip discharge groove and the coolant hole are made to have the same lead as in the end mill described in PTL 1.

If the first coolant hole extends while being greatly biased in this way, the thickness between the first coolant hole, and the wall face, which that faces the backward side in the rotational direction of the end mill, in the chip discharge groove connected to the gash in which the second end cutting edge is formed becomes small. As a result, when rigidity decreases in the cut and raised portion of the chip discharge groove on which the greatest load acts particularly at the time of cutting work, that is, in the rear end portion of the cutting edge part, and an excessive load acts, there is a concern that breakage of the end mill body may be caused.

Thus, in such a case, the lead of the first coolant hole is made greater than the lead of the second peripheral cutting edge connected to the second end cutting edge. Accordingly, the first coolant hole can be provided to extend so as to be relatively separated from the forward side in the rotational direction of the end mill, with respect to the wall face, which faces the backward side in the rotational direction of the end mill, in the chip discharge groove in which the second peripheral cutting edge is formed, that is, the chip discharge groove connected to the gash in which the second end cutting edge is formed, toward the rear end side of the cutting edge part. Therefore, a decrease in rigidity can be prevented by ensuring the thickness of the end mill body between the first coolant hole, and the wall face of the chip discharge groove adjacent to the backward side thereof in the rotational direction of the end mill, even in the cut and raised portion of the chip discharge groove.

Additionally, when the end mill body is formed of a powder sintered alloy, such as cemented carbide, the end mill with coolant holes including such twisted coolant holes is manufactured, for example as described in PTL 1, by kneading base powder of this powder sintered alloy with a binder to twist and push out the resulting mixture from an extrusion molding device including a core cylinder (beam), and thereby molding a columnar material in which spiral holes that become coolant holes are formed, sintering the columnar material, and then forming chip discharge grooves, gashes, and tip flank faces to grind peripheral cutting edges and end cutting edges.

In the end mill with coolant holes manufactured in this way, the leads of the plurality of coolant holes formed in the end mill body are made equal to each other. In this case, however, the leads of the coolant holes are made equal to or greater than the greatest lead among the leads of the plurality of peripheral cutting edges formed in the cutting edge part. Accordingly, all the coolant holes can be formed at least so as not to be brought close to the wall faces, which face the backward sides in the rotational direction of the end mill, in the chip discharge grooves adjacent to the backward sides in the rotational direction of the end mill toward the rear end side of the cutting edge part. Therefore, particularly when the lead of the first coolant hole is made greater than the lead of the second peripheral cutting edge as described above, it is possible to ensure the thicknesses between all the coolant holes, also including the first coolant hole in which the interval between the first end cutting edge and the opening is made greater, and the wall faces of the chip discharge grooves on the backward sides thereof in the rotational direction of the end mill, at the rear end of the cutting edge part.

Moreover, the circumferential interval between the first end cutting edge, and a third end cutting edge adjacent to a forward side of the first end cutting edge in the rotational direction of the end mill is made smaller than the circumferential interval between the first end cutting edge and the second end cutting edge. Accordingly, it is possible to achieve the balance between the amount of cutting obtained by the first end cutting edge that is the long end cutting edge and the amount of cutting obtained by the second end cutting edge shorter than the first end cutting edge. Additionally, the lead of the third peripheral cutting edge connected to the third end cutting edge is made greater than the leads of first and second peripheral cutting edges connected to the first and second end cutting edges, respectively. Accordingly, generation of chattering vibration resulting from so-called unequal leads of the third, first, and second peripheral cutting edges adjacent to each other in the circumferential direction in this order toward the backward side in the rotational direction of the end mill can be suppressed.

Additionally, in this case, the interval between the first and third peripheral cutting edges that becomes smaller than the circumferential interval between the first and second peripheral cutting edges in the portions connected to the end cutting edges becomes gradually greater toward the rear end side of the cutting edge part. Thus, in the cut and raised portions of the chip discharge grooves of the rear end of the cutting edge part, the interval between the first and third peripheral cutting edges and the interval between the first and second peripheral cutting edges can be brought close to equal intervals, and the rigidity of the end mill body can be improved.

In this case, particularly, the lead of the first coolant hole is made greater than the lead of the second peripheral cutting edge as described above, and the leads of the plurality of coolant holes are made equal to each other and are made equal to or greater than the greatest lead among the leads of the plurality of peripheral cutting edges. Accordingly, the leads of the coolant holes made equal to each other become equal to or greater than the lead of at least the third peripheral cutting edge, and become greater than the leads of the first and second peripheral cutting edge with a greater difference than a difference from the lead of the third peripheral cutting edge.

For this reason, as described above, the interval between the first and third peripheral cutting edges and the interval between the first and second peripheral cutting edges can also be brought close to equal intervals toward the rear end side of the cutting edge part. In addition to this, the circumferential intervals between the first to third peripheral cutting edges and the respective coolant holes located on the backward side thereof in the rotational direction of the end mill in the section orthogonal to the axis can be brought close to equal intervals. Therefore, in the cut and raised portions of the chip discharge grooves, the thicknesses of the end mill body between the coolant holes and the wall faces of the chip discharge grooves adjacent to the forward side thereof in the rotational direction of the end mill and the backward side thereof in the rotational direction of the end mill, respectively, can be equalized, and it is possible to further improve the rigidity of the end mill body in the cut and raised portions.

In addition, the invention can be applied to end mills in which a plurality of chip discharge grooves are formed at a cutting edge part, and the same numbers of peripheral cutting edges, gashes, and end cutting edges are also formed as that of the chip discharge grooves, that is, four-cutting-edge end mills in which a long end cutting edge and a short end cutting edge are alternately formed in the circumferential direction, for example, as described in PTL 2, except a one-cutting edge end mill. Particularly, it is preferable to apply the invention to three-cutting edge end mills in which one end cutting edge is a long end cutting edge and extends further toward an inner peripheral side than the other two end cutting edges adjacent thereto, that is, to end mills with coolant holes in which the three chip discharge grooves, the three peripheral cutting edges, the three gashes, the three end cutting edges, and the three coolant holes are formed at the cutting edge part.

### Advantageous Effects of Invention

As described above, according to the invention, in the end mill in which the long end cutting edge is formed at the cutting edge part of the tip of the end mill body, a coolant can be efficiently supplied to the gashes formed on the backward side of the long end cutting edge in the rotational direction of the end mill, and it is possible to prevent chip clogging in the gashes to ensure chip discharge performance to thereby perform stable cutting work.

### Brief Description of Drawings

Fig. 1 is a perspective view illustrating an embodiment of the invention.
Fig. 2 is an enlarged front view of the embodiment illustrated in Fig. 1.
Fig. 3 is an enlarged side view as seen in the direction of an arrow X in Fig. 2 of a cutting edge part of the embodiment illustrated in Fig. 1.
Fig. 4 is an enlarged plan view as seen in the direction of an arrow Y in Fig. 2 of the cutting edge part of the embodiment illustrated in Fig. 1.
Fig. 5 is a ZZ enlarged sectional view in Fig. 3.

### Description of Embodiments

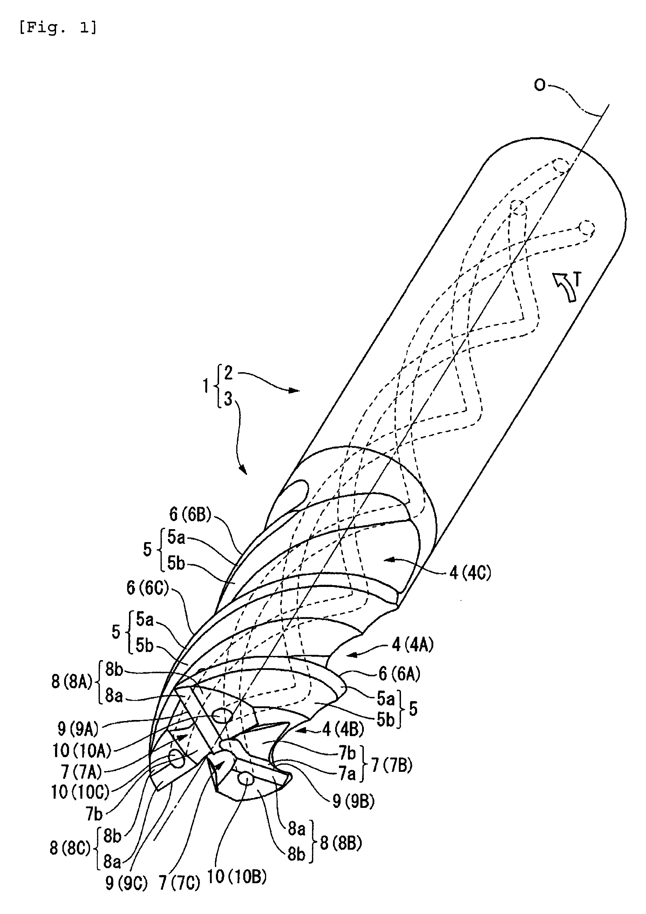

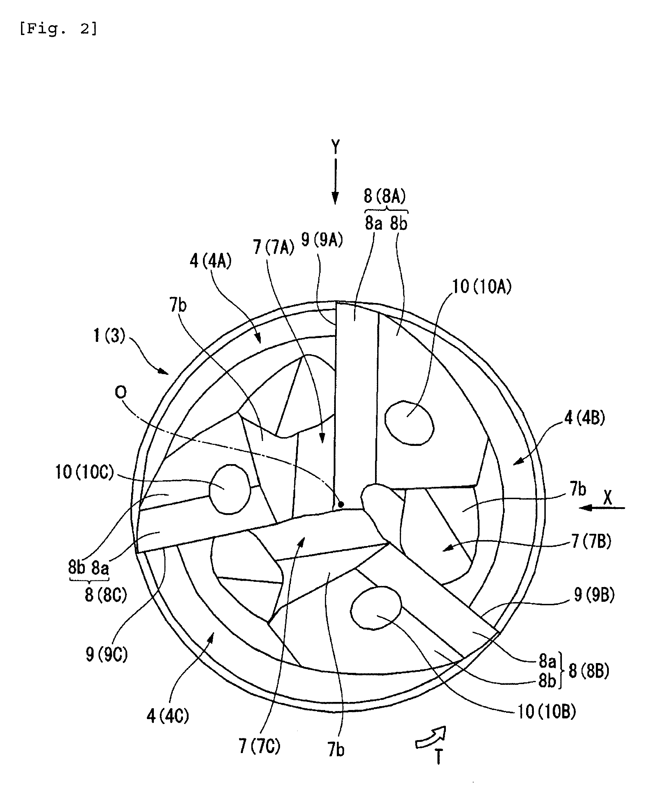

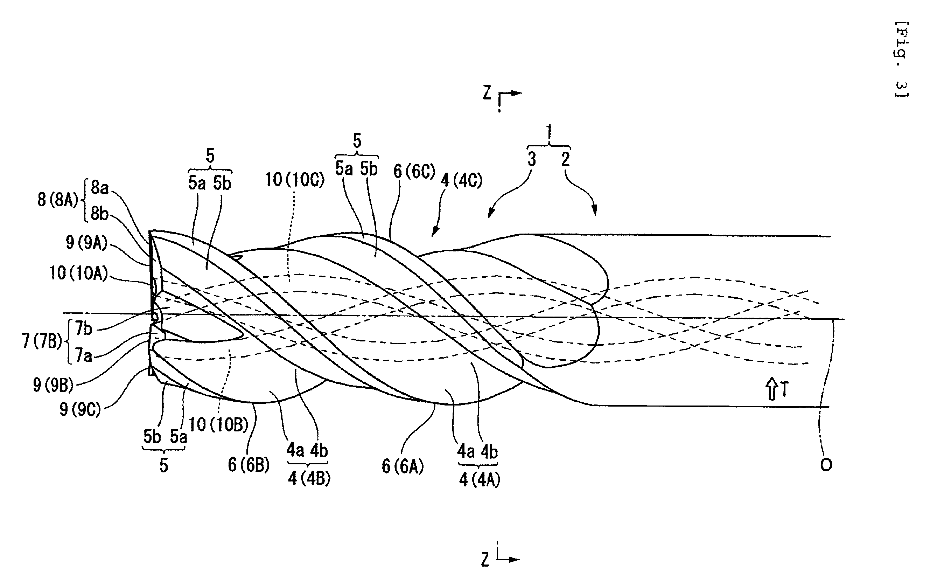

Figs. 1 to 5 illustrate an embodiment of an end mill with coolant holes of the invention. In the present embodiment, the end mill body 1 is formed in a substantially columnar shape having an axis O as a center, using a hard material, such as cemented carbide, a rear end portion (an upper right portion in Fig. 1 and a right portion in Figs. 2 and 3) of the end mill body is a shank part 2 in a columnar shape, and a tip portion (a lower left portion in Fig. 1 and a left portion in Figs. 2 and 3) is a cutting edge part 3. Such an end mill with coolant holes is usually fed in a direction intersecting the axis O while the shank part 2 is gripped by a spindle of a machine tool and is rotated in a rotational direction T of the end mill around the axis O, and performs grooving and shouldering to a workpiece material, such as a metallic material using the cutting edge part 3.

A plurality of chip discharge grooves 4, which are twisted to a backward side in the rotational direction T of the end mill toward a rear end side, open at a tip of the cutting edge part 3, that is, a tip of the end mill body 1, and are formed at predetermined intervals in the circumferential direction at an outer periphery of the cutting edge part 3. In the present embodiment, three first to third chip discharge grooves 4A to 4C are formed in this order toward the backward side in the rotational direction T of the end mill. Peripheral cutting edges 6 that have the wall faces 4a as rake faces are respectively formed at outer-peripheral-side ridge portions of wall faces 4a of the chip discharge grooves 4 that face in the rotational direction T of the end mill, that is, intersecting ridgeline portions between the wall faces 4a and peripheral flank faces 5 that face an outer peripheral side of the cutting edge part 3.

Therefore, in the present embodiment, three first to third peripheral cutting edges 6A to 6C are formed in this order toward the backward side in the rotational direction T of the end mill, and the first to third peripheral cutting edges 6A to 6C are respectively twisted to the backward side in the rotational direction T of the end mill toward the rear end side of the end mill body 1 with a lead equal to the first to third chip discharge grooves 4A to 4C. In addition, rotation tracks that these peripheral cutting edges 6 form around the axis O form one cylindrical surface centered on the axis O. In addition, in the present embodiment, the peripheral flank face 5 is formed by a first flank face 5a that intersects the peripheral cutting edge 6 and has a smaller flank angle and a second flank face 5b that is connected to the first flank face 5a on the backward side in the rotational direction T of the end mill and has a greater flank angle.

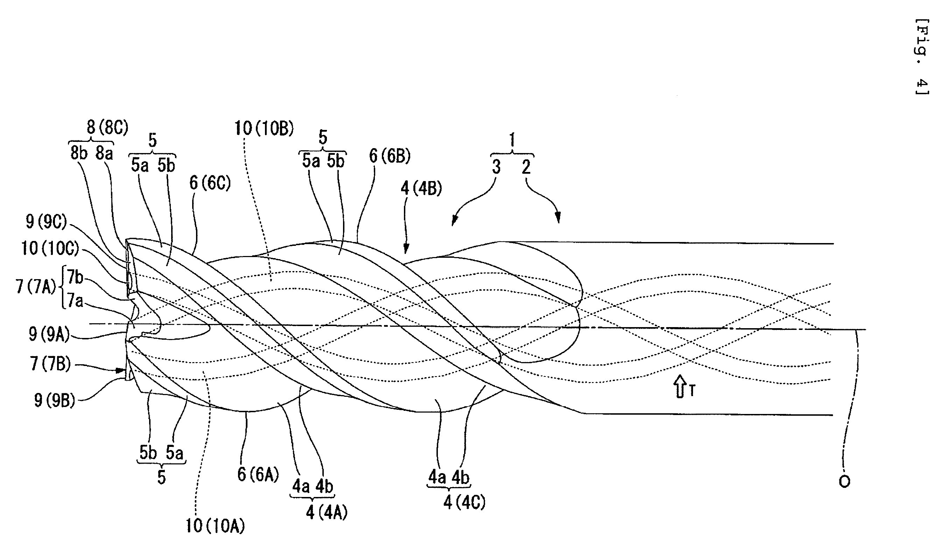

Moreover, a gash 7 having a recessed groove shape is formed at a tip portion of each chip discharge groove 4 in such a manner that the wall face 4a of each chip discharge groove 4 that faces in the rotational direction T of the end mill is cut out toward an inner peripheral side of the end mill body 1. The gash 7 is formed in a V-shape that becomes gradually wider toward the tip side as illustrated in Fig. 3 or 4 as seen from the outer peripheral side of the end mill body 1, and has a wall face 7a that faces in the rotational direction T of the end mill, and a wall face 7b that faces the backward side in the rotational direction T of the end mill. Therefore, in the present embodiment, the first to third gashes 7A to 7C are also respectively formed in this order toward the backward side in the rotational direction T of the end mill, at tip portions of the first to third chip discharge grooves 4A to 4C.

Also, end cutting edges 9, which are connected to the tips of the peripheral cutting edges 6 and extend toward the inner peripheral side of the end mill body 1, are respectively formed at intersecting ridgeline portions between the respective wall faces 7a of the gashes 7 that face in the rotational direction T of the end mill and tip flank faces 8 formed by a tip surface of the cutting edge part 3 being cut out by the chip discharge grooves 4 and the gashes 7. In addition, in the present embodiment, the tip flank face 8 is also formed by a first flank face 8a that intersects the end cutting edge 9 and has a smaller flank angle and a second flank face 8b that is connected to the first flank face 8a on the backward side in the rotational direction T of the end mill and has a greater flank angle.

Here, three first to third tip flank faces 8A to 8C are formed by the three first to third chip discharge grooves 4A to 4C and the gashes 7A to 7C, at the tip surface of the cutting edge part 3. In addition, the widths of the first flank faces 8a of the first to third tip flank faces 8A to 8C are made equal to each other. Also, in the order toward the backward side in the rotational direction T of the end mill, a first end cutting edge 9A is formed at an intersecting ridgeline portion between the wall face 7a of the first gash 7A and the first tip flank face 8A, a second end cutting edge 9B is formed at an intersecting ridgeline portion between the wall face 7a of the second gash 7B and the second tip flank face 8B, and a third end cutting edge 9C is formed at an intersecting ridgeline portion between the wall face 7a of the third gash 7C and the third tip flank face 8C. That is, the end mill with coolant holes of the present embodiment is a three-cutting-edge end mill.

The first to third end cutting edges 9A to 9C are located on one plane on which the rotation tracks around the axis O are orthogonal to the axis O or on one concave conical surface that is extremely slightly recessed to the rear end side in the direction of the axis O toward the inner peripheral side, and the end mill of the present embodiment is formed as a square end mill in which the end cutting edges 9 are orthogonal to the peripheral cutting edge 6 or intersect the peripheral cutting edges 6 at a slightly acute angle, in the rotation tracks. Additionally, in a tip view in the direction of the axis O, each end cutting edge 9 extends linearly, and has a so-called arrangement-above-center so as to be located slightly closer to a forward side in the rotational direction T of the end mill than a straight line that is parallel to the end cutting edge 9 and passes through the axis O.

The first end cutting edge 9A among the first to third end cutting edges 9A to 9C is a long end cutting edge that extends further to the inner peripheral side of the end mill body 1 than the second end cutting edge 9B adjacent to the backward side thereof in the rotational direction T of the end mill, and in the present embodiment, extends further to the inner peripheral side of the end mill body 1 than the third end cutting edge 9C adjacent to the forward side thereof in the rotational direction T of the end mill. The first end cutting edge 9A that is a long end cutting edge, as illustrated in Fig. 2 as seen in the tip view in the direction of the axis O, extends up to a position that is away from the axis O, in a radial direction of the end mill body 1 from the tip of the peripheral cutting edge 6A.

Additionally, the third end cutting edge 9C adjacent to the forward side of the first end cutting edge 9A in the rotational direction T of the end mill is a short end cutting edge with the shortest length to the inner peripheral side of the end mill body 1, among the first to third end cutting edges 9A to 9C. Moreover, the second end cutting edge 9B adjacent to the forward side of the third end cutting edge 9C in the rotational direction T of the end mill, that is, adjacent to the backward side the first end cutting edge 9A in the rotational direction T of the end mill is a middle end cutting edge having a length intermediate between the first and third end cutting edges 9A and 9C that are short and long end cutting edges.

Such first the third end cutting edges 9A to 9C are formed to be longer and shorter by making the first to third gashes 7A to 7C have different sizes. The first gash 7A along which the first end cutting edge 9A is formed at the intersecting ridgeline portion between the wall face 7a and the first tip flank face 8A is formed so that an inner peripheral portion of the third tip flank face 8C adjacent to the forward side in the rotational direction T of the end mill is largely cut out and communicates with the third gash 7C.

Additionally, the third gash 7C along which the third end cutting edge 9C is formed at the intersecting ridgeline portion between the wall face 7a and the third tip flank face 8C is formed so that an inner peripheral portion of the second tip flank face 8B adjacent to the forward side in the rotational direction T of the end mill is largely cut out and communicates with the second gash 7B. However, a size with which the third gash 7C cuts out the second tip flank face 8B is made smaller than a size with which the first gash 7A cuts out the third tip flank face 8C.

With respect to the first and third gashes 7A and 7C, the second gash 7B along which the second end cutting edge 9B is formed at the intersecting ridgeline portion between the wall face 7a and the second tip flank face 8B does not cut out the first tip flank face 8A adjacent to the forward side in the rotational direction T of the end mill until the first tip flank face 8A communicates with the first gash 7A, and is left on the inner peripheral side until the first flank face 8a of the first tip flank face 8A is away from the axis O in the tip view in the direction of the axis O between the first and second gashes 7A and 7B. Therefore, the first to third end cutting edges 9A to 9C are long, middle, and short end cutting edges, respectively.

Meanwhile, three coolant holes 10 of the same number as that of the chip discharge grooves 4, the peripheral cutting edges 6, and the end cutting edges 9 are formed at predetermined intervals from each other in the circumferential direction within the end mill body 1 so as to extend from a rear end surface of the shank part 2, that is, a rear end surface of the end mill body 1 toward the tip side. When a coolant, such as a cutting fluid, is jetted to the tip of the end mill body 1 via the coolant holes 10 at the time of cutting work, lubrication or cooling of the end cutting edge 9 and discharge of chips are promoted. In addition, the respective coolant holes 10 are formed so as to form a substantially circular shape having the same internal diameter as each other in a section orthogonal to the axis O.

Additionally, the coolant holes 10 are formed so as to be twisted to the backward side in the rotational direction T of the end mill toward the rear end side in the direction of the axis O, similar to the chip discharge grooves 4 and the peripheral cutting edges 6, and are made to open at the tip of the cutting edge part 3, that is, the tip of the end mill body 1 between the chip discharge grooves 4 adjacent to each other in the circumferential direction in the cutting edge part 3. Particularly, in the present embodiment, all of the coolant holes 10 open at the respective tip flank faces 8 between the chip discharge grooves 4 of the tip of the end mill body 1.

Among the coolant holes 10, a first coolant hole 10A, which passes between the first chip discharge groove 4A connected to the first gash 7A along which the first end cutting edge 9A that is a long end cutting edge is formed, and the second chip discharge groove 4B adjacent to the backward side of the first chip discharge groove 4A in the rotational direction T of the end mill, opens so that the entire opening thereof is located at the second flank face 8b in the first tip flank face 8A connected to the backward side of the first end cutting edge 9A, which is a long end cutting edge, in the rotational direction T of the end mill. In contrast, the second coolant hole 10B, which passes between the second chip discharge groove 4B and the third chip discharge grooves 4C adjacent to the backward side thereof in the rotational direction T of the end mill, opens at a boundary line between the first and second flank faces 8a and 8b of the second tip flank face 8B.

Therefore, the interval, in the tip view in the direction of the axis O, between the first end cutting edge 9A and the opening of the first coolant hole 10A is made greater than the interval, in the tip view in the direction of the axis O, between the second end cutting edge 9B adjacent to the backward side of the first end cutting edge 9A in the rotational direction T of the end mill and the opening of the second coolant hole 10B. Additionally, the third coolant hole 10C, which passes between the third chip discharge groove 4C and the first chip discharge grooves 4A adjacent to the backward side thereof in the rotational direction T of the end mill, also opens at a boundary line between the first and second flank faces 8a and 8b of the third tip flank face 8C. However, the interval, in the tip view in the direction of the axis O, between the opening of the third coolant hole 10C and the third end cutting edge 9C is made smaller than the interval, in the tip view in the direction of the axis O, between the second end cutting edge 9B and the opening of the second coolant hole 10B.

That is, in the present embodiment, the intervals, in the tip view in the direction of the axis O, between the end cutting edges 9 and the coolant holes 10 on the backward side thereof in the rotational direction T of the end mill are made greater in the order of the first, second, and third end cutting edges 9A, 9B, and 9C in increasing length. In addition, the interval between an end cutting edge 9 and each coolant hole 10 adjacent to the backward side thereof in the rotational direction T of the end mill in the tip view in the direction of the axis O is, for example, the shortest distance between each end cutting edge 9 and an opening edge of each coolant hole 10.

Moreover, in the present embodiment, the three first to third coolant holes 10A to 10C have leads equal to each other, and are formed at equal intervals in the circumferential direction on one cylindrical surface centered on the axis O of the end mill body 1. Therefore, the openings of the coolant holes 10A to 10C at the tip of the end mill body 1 are also arranged at equal intervals in the circumferential direction. In contrast, since the circumferential intervals between the first to third end cutting edges 9A to 9C are made to be unequal intervals, the intervals between the end cutting edges 9 and the coolant holes 10 are made to be different from each other as described above in the present embodiment.

Specifically, in the present embodiment, the circumferential interval between the first end cutting edge 9A that is a long end cutting edge, and the second end cutting edge 9B that is a middle end cutting edge on the backward side thereof in the rotational direction T of the end mill, and the circumferential interval between the second end cutting edge 9B, and the third end cutting edge 9C that is a short end cutting edge on the backward side thereof in the rotational direction T of the end mill are made equal to each other, and are made greater than the interval between the third end cutting edge 9C, and the first end cutting edge 9A located on the backward side thereof in the rotational direction T of the end mill. In addition, the circumferential intervals between the end cutting edges 9 have, for example the length of a circular arc that is centered on the axis O in the tip view in the direction of the axis O and connects the peripheral tips of the end cutting edges 9 adjacent to each other in the circumferential direction.

Furthermore, in the present embodiment, the leads of the peripheral cutting edges 6 connected to the outer peripheral ends of the end cutting edges 9 are made to have different sizes. Specifically, in the present embodiment, the lead of the first peripheral cutting edge 6A connected to the first end cutting edge 9A is made smallest, that is, the twist angle of the first peripheral cutting edge 6A is made greatest, the lead of the third peripheral cutting edge 6C connected to the third end cutting edge 9C is made greatest, that is, the twist angle of the third peripheral cutting edge 6C is made smallest, the lead and twist angle of the second peripheral cutting edge 6B connected to the second end cutting edge 9B are made to be intermediate sizes between the leads and twist angles of the first and the third peripheral cutting edges 6A and 6C, and the twist angle of the second peripheral cutting edge 6B is 1/2 of the sum of the twist angles of the first and third peripheral cutting edges 6A and 6C.

Meanwhile, similar to the peripheral cutting edges 6, the leads of the first to third coolant holes 10A to 10C that are twisted to the backward side in the rotational direction T of the end mill toward the rear end side in the direction of the axis O are equal to each other as described above, and are made equal to or greater than the greatest lead among the leads of the first to third peripheral cutting edges 6A to 6C, that is, equal to or greater than the lead of the third peripheral cutting edge 6, and particularly in the present embodiment, are made equal to the lead of the third peripheral cutting edge 6C. Therefore, the leads of the coolant holes 10 and particularly the lead of the first coolant hole 10A are made greater than the lead of the second peripheral cutting edge 6B located on the backward side in the rotational direction T of the end mill and the lead of the second chip discharge groove 4B in which the second peripheral cutting edge 6B is formed in the wall face 4a.

When the leads of the first to third coolant holes 10A to 10C and the peripheral cutting edges 6A to 6C, the circumferential intervals between the first to third end cutting edges 9A to 9C, and the intervals, in the tip view in the direction of the axis O, between the first to third end cutting edges 9A to 9C and the coolant holes 10A to 10C are set in this way, the first coolant hole 10A in which the interval between the end cutting edges 9 (first end cutting edges 9A) adjacent to the forward side in the rotational direction T of the end mill first is made greatest is, in a section orthogonal to the axis O toward the rear end side in the direction of the axis O, relatively brought closer to the wall face 4a that faces in the rotational direction T of the end mill in the first chip discharge groove 4A that is a rake face of the first peripheral cutting edge 6A and is relatively separated from the wall face 4b that faces the backward side in the rotational direction T of the end mill in the second chip discharge groove 4B in which the second peripheral cutting edge 6B is formed.

Additionally, the second coolant hole 10B in which the interval between the end cutting edges 9 (second end cutting edges 9B) adjacent to the forward side in the rotational direction T of the end mill next is great is relatively brought closer to the wall face 4a that faces in the rotational direction T of the end mill in the second chip discharge groove 4B that is a rake face of the second peripheral cutting edge 6B, in the section orthogonal to the axis O toward the rear end side of the axis O. However, the degree of the approach of the second coolant hole 10B is smaller than that of the first coolant hole 10A. Meanwhile, since the lead of the third coolant hole 10C is made equal to that of the third peripheral cutting edge 6C in the present embodiment, the interval between the third coolant hole 10C and the wall face 4a that is a rake face of the third peripheral cutting edge 6C is made constant in the direction of the axis O.

Moreover, as for the circumferential intervals between the peripheral cutting edges 6 adjacent to each other, the interval between the first peripheral cutting edge 6A and the third peripheral cutting edge 6C on the forward side thereof in the rotational direction T of the end mill that is made to have the smallest interval in a portion connected to the end cutting edge 9 of the tip of the end mill body 1 becomes gradually greater toward the rear end side in the direction of the axis O. In contrast, the interval between the first peripheral cutting edge 6A, and the second peripheral cutting edge 6B on the backward side thereof in the rotational direction T of the end mill and the interval between the second peripheral cutting edge 6B and the third peripheral cutting edge 6C on the backward side thereof in the rotational direction T of the end mill become gradually smaller, and the rates at which the intervals become smaller are made equal to each other.

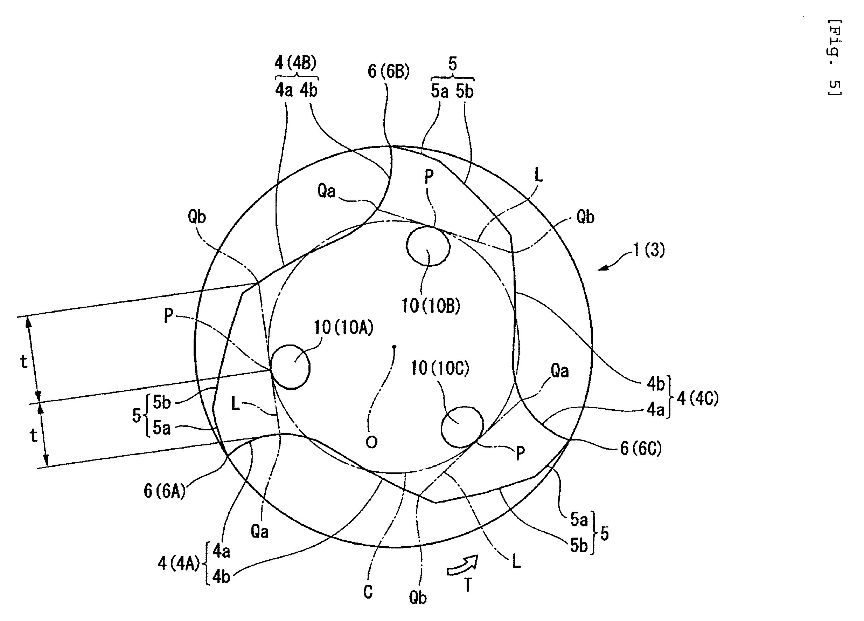

When the circumferential intervals between the peripheral cutting edges 6 adjacent to each other vary toward the rear end side in the direction of the axis O in this way, in the present embodiment, the circumferential intervals between the first to third peripheral cutting edges 6A to 6C are made equal to each other as illustrated in Fig. 5, in the cut and raised portions of the chip discharge grooves 4 of the cutting edge part 3, that is, in positions where the chip discharge grooves 4 begin to be cut and raised on the outer peripheral side toward the shank part 2 side. In addition, each chip discharge groove 4 is adapted such that, when portions from the wall face 4a that faces in the rotational direction T of the end mill to the wall face 4b that faces the backward side in the rotational direction T of the end mill have almost the same cross-sectional shape and dimensions and the width of, particularly, the second flank face 5b of the peripheral flank face 5 connected to the backward side of the peripheral cutting edge 6 in the rotational direction T of the end mill varies, the circumferential intervals between peripheral cutting edges 6 adjacent to each other increase and decrease as described above.

Additionally, in the cut and raised portions of the chip discharge grooves 4, the intervals between the wall faces 4a that face in the rotational direction T of the end mill in the first to third chip discharge grooves 4A to 4C that are rake faces of the first to third peripheral cutting edges 6A to 6C, and the first to third coolant holes 10A to 10C of the respective wall faces 4a that are located on the backward side in the rotational direction T of the end mill in the section orthogonal to the axis O are made equal to each other, and an equal thickness t is ensured between the respective wall faces 4a and the coolant holes 10.

Moreover, in the present embodiment, in the cut and raised portions of the chip discharge grooves 4, each coolant hole 10 is formed so that a substantially equal thickness t is also ensured between the wall face 4a that faces in the rotational direction T of the end mill in the chip discharge groove 4 formed on the forward side of each coolant hole 10 in the rotational direction T of the end mill and the wall face 4b that faces the backward side in the rotational direction T of the end mill in the chip discharge groove 4 formed on the backward side of each coolant hole 10 in the rotational direction T of the end mill, in the section orthogonal to the axis O of the end mill body 1 as illustrated in Fig. 5.

Here, when a circle C that touches each coolant hole 10 from the outer peripheral side of the end mill body 1 is drawn, for example in the section orthogonal to the axis O as illustrated in Fig. 5, the thickness t is, the interval between an intersection point Qa between a tangential line L and the wall face 4a, and a contact point P, and the interval between an intersection point Qb between the tangential line L and the wall face 4b, and the contact point P, on the common tangential line L at the contact point P of the circle C and a circle formed by the coolant hole 10. Additionally, as for the substantially equal thickness t, a middle point between the intersection points Qa and Qb, for example in the above section may be located within a range of the circle formed by the coolant hole 10 in the direction of the tangential line L.

In such an end mill with coolant holes, in order to form the first end cutting edge 9A that is a long end cutting edge as described above so as to extend to the inner peripheral side of the tip of the end mill body 1 and to be long, the second gash 7B adjacent to the backward side of the first end cutting edge 9A in the rotational direction T of the end mill cannot be formed only up to a position apart from the axis O toward the inner peripheral side of the tip of the end mill body 1. As a result, a gash depth becomes shallow, and the volume of a pocket into which chips generated by the second end cutting edge 9B are discharged also cannot help but be limited.

However, in contrast, according to the end mill with coolant holes of the above configuration, the interval, in the tip view in the direction of the axis O, between the first end cutting edge 9A and the opening of the first coolant hole 10A opening to the backward side thereof in the rotational direction T of the end mill is made greater than the interval between the second end cutting edge 9B and the opening of the second coolant hole 10B. Therefore, for example compared to a case where the intervals between the respective end cutting edges 9 and the openings of the coolant holes 10 on the backward sides thereof in the rotational direction T of the end mill are made equal to each other, a coolant can be efficiently supplied from the first coolant hole 10 toward the second gash 7B, it is possible to reliably push out and discharge chips to the second chip discharge groove 4B without causing clogging even if the pocket volume of the second gash 7B is small, and stable cutting work can be performed.

Particularly, in the present embodiment, the interval, in the tip view in the direction of the axis O, between the first end cutting edge 9A that is a long end cutting edge and the opening of the first coolant hole 10A on the backward side thereof in the rotational direction T of the end mill is made greater than the interval between the third end cutting edge 9C and the opening of the third coolant hole 10C, and becomes the greatest interval in the end mill body 1. For this reason, better positive chip discharge from the second gash 7B toward the second chip discharge groove 4B can be achieved.

Meanwhile, since the first and third gashes 7A and 7C in which the first and third end cutting edges 9A and 9C are formed extend so as to be away from the axis O to the inner peripheral side in the tip view in the direction of the axis O, have a deeper gash depth than the second gash 7B, and communicate with the third and second gashes 7C and 7B adjacent to the forward side thereof in the rotational direction T of the end mill, the volume of a pocket for chip discharge can be sufficiently ensured. Therefore, even if the intervals, in the tip view in the direction of the axis O, between the second and third end cutting edges 9B and 9C and the openings of the second and third coolant holes 10B and 10C are made smaller than the interval between the first end cutting edge 9A and the first coolant hole 10A, there is no concern that chip clogging may be caused.

Additionally, particularly in the present embodiment, the circumferential interval between the opening of the second coolant hole 10C and the third end cutting edge 9C on the backward side in the rotational direction T of the end mill becomes greater than the interval between the first coolant hole 10A and the second end cutting edge 9B. However, the respective end cutting edges 9 also including the third end cutting edge 9C perform cutting so as to involve a coolant supplied from the coolant holes 10 on the forward side in the rotational direction T of the end mill with the rotation of the end mill body 1. Therefore, even if the above interval is made great, there is no concern that the lubricating effect and cooling effect of the end cutting edges 9 by the coolant are impaired.

Meanwhile, in the present embodiment, the first coolant hole 10A in which the interval, in the tip view in the direction of the axis O, between the first end cutting edge 9A and the opening as described above, is made greater than the intervals between the second and third end cutting edges 9B and 9C and the openings of the second and third coolant holes 10B and 10C is made to have a greater lead than the lead of the second peripheral cutting edge 6B located on the backward side of the first coolant hole 10A in the rotational direction T of the end mill. Therefore, the first coolant hole 10A is separated from the suitable wall face 4b that faces the backward side in the rotational direction T of the end mill in the second chip discharge groove 4B in which the second peripheral cutting edge 6B is formed, in the section orthogonal to the axis O toward the rear end side in the direction of the axis O as described above.

Therefore, even if the interval between the first coolant hole 10A and the first end cutting edge 9A is great in the opening of the first coolant hole 10A to the tip flank face 8 (first tip flank face 8A) of the tip of the end mill body 1 and the first coolant hole 10A opens near the second gash 7B, the thickness t between the wall face 4b and the first coolant hole 10A can be prevented from being thin in the cut and raised portion of the chip discharge groove 4 as in the present embodiment so that the interval between the first coolant hole 10A and the wall face 4b of the second chip discharge groove 4B becomes greater toward the rear end side in the direction of the axis O. For this reason, the rigidity of the end mill body 1 in the above cut and raised portion can be ensured, and even if an excessive load acts at the time of cutting and a force to bend the cutting edge part 3 from this cut and raised portion is applied, breakage can be prevented from occurring in the end mill body 1.

Additionally, in the present embodiment, the lead of the first coolant hole 10A is greater than the lead of the first peripheral cutting edge 6A and the first chip discharge groove 4A located on the forward side in the rotational direction T of the end mill. Therefore, the first coolant hole 10A is separated from the wall face 4b of the second chip discharge groove 4B as described above toward the rear end side in the direction of the axis O, and is relatively brought closer to the wall face 4a that faces in the rotational direction T of the end mill in the first chip discharge groove 4A that is a rake face of the first peripheral cutting edge 6A. Therefore, it is possible to form the cutting edge part 3 so that the thickness t of the end mill body 1 between the wall face 4a on the forward side of the first coolant hole 10A in the rotational direction T of the end mill and the wall face 4b on the backward side of the first coolant hole 10A in the rotational direction T of the end mill becomes reliably uniform in the cut and raised portion of the chip discharge groove 4.

Moreover, in the present embodiment, the coolant holes 10 formed in the end mill body 1 are formed so as to be twisted in the same direction with leads equal to each other. When the end mill body 1 is formed of a powder sintered alloy, such as cemented carbide, the end mill body 1 can be manufactured by kneading base powder of this powder sintered alloy with a binder to twist and push out the resulting mixture from an extrusion molding device, and thereby molding a columnar material in which spiral holes with the same lead that become coolant holes are formed, sintering the columnar material, and then forming chip discharge grooves, gashes, tip flank faces, and peripheral flank faces to grind peripheral cutting edges and end cutting edges.

The leads of the coolant holes 10 made equal to each other in this way are made to be equal to or greater than the greatest lead among the leads of the plurality of peripheral cutting edges 6 formed in the cutting edge part 3, and are made equal to the lead of the largest third peripheral cutting edge 6C in the present embodiment. For this reason, all the coolant holes 10 are formed at least so as not to be brought close to the wall face 4b that faces the backward side in the rotational direction T of the end mill in the chip discharge groove 4 located on the backward side in the rotational direction T of the end mill toward the rear end side in the direction of the axis O. Thus, it is possible to prevent the thickness between the above cut and raised portion and the wall face 4b from being thin in the above cut and raised portion and prevent lack of rigidity from occurring, regarding all the coolant holes 10. Of course, the leads of the coolant holes 10 are set to a size such that the coolant holes 10 do not open at the wall faces 4a of the chip discharge grooves 4 that face in the rotational direction T of the end mill on the read end side of the cutting edge part 3.

Additionally, in the present embodiment, the circumferential interval between the first end cutting edge 9A that is a long end cutting edge and the third end cutting edge 9C adjacent to the forward side thereof in the rotational direction T of the end mill is made smaller than the circumferential interval between the first end cutting edge 9A and the second end cutting edge 9B that is a middle end cutting edge adjacent to the backward side thereof in the rotational direction T of the end mill. Thus, the amount of cutting by the first end cutting edge 9A with a longer cutting edge length can be balanced with the amount of cutting by the second end cutting edge 9B with a shorter cutting edge length than the first end cutting edge 9A, and thereby, the lifespan of the entire end mill body 1 can be prevented from being ended by the first end cutting edge 9A being prematurely worn out. Moreover, in the present embodiment, the interval between the first and third end cutting edges 9A and 9C is made smaller than the circumferential interval between the third end cutting edge 9C that is a short end cutting edge and the second end cutting edge 9B adjacent to the forward side thereof in the rotational direction T of the end mill. Thus, the balance between the amounts of cutting can be made more uniform.

Moreover, in the present embodiment, in addition to the circumferential intervals between the end cutting edges 9 adjacent to each other in this way being set to different sizes, the lead of the third peripheral cutting edge 6C connected to the third end cutting edge 9C is made greater than the leads of the first and second peripheral cutting edges 6A and 6B, and the leads of the first and second peripheral cutting edges 6A and 6B are also set to different sizes. Therefore, the cycles of vibrations when the end cutting edges 9 and the peripheral cutting edges 6 bite a workpiece material are different from each other, and these vibrations cancel each other out. Therefore, it is possible to prevent occurrence of a chattering vibration caused by periodic vibration acting on the end mill body 1.

Additionally, the circumferential interval between the first and the third end cutting edges 9A and 9C is made smaller than the circumferential interval between the first and second end cutting edges 9A and 9B in this way, whereas the lead of the third peripheral cutting edge 6C is made greater than the lead of the first and second peripheral cutting edges 6A and 6B. Therefore, the interval between the first and third peripheral cutting edges 6A and 6C can be brought close to the interval between the first and third peripheral cutting edges 6A and 6C toward the rear end side in the direction of the axis O. Moreover, in the present embodiment, the lead of the second peripheral cutting edge 6B connected to the second end cutting edge 9B in which the interval between the second end cutting edge 9B and the third end cutting edge 9C is made equal to the interval between the second end cutting edge 9B and the first end cutting edge 9A is set to an intermediate size between the leads of the first and third peripheral cutting edges 6A and 6C. Thus, the circumferential intervals between all the peripheral cutting edges 6 can be regular intervals as described above in the cut and raised portions of the chip discharge grooves 4, and the rigidity of the end mill body 1 can be improved.

Moreover, in the present embodiment, in addition to the sizes of the intervals between such end cutting edges 9 and the leads of the peripheral cutting edges 6, as described above, the leads of the plurality of coolant holes 10 are made equal to each other, and are made equal to or greater than the lead of the third peripheral cutting edge 6C that is the greatest lead among the leads of the plurality of peripheral cutting edges 6. Thus, in the cut and raised portions of the chip discharge grooves 4, the intervals between the wall faces 4a that face in the rotational direction T of the end mill in the chip discharge grooves 4 that are rake faces of the peripheral cutting edges 6, and the coolant holes 10 located on the backward side thereof in the rotational direction T of the end mill can also be regular intervals.

Therefore, when the circumferential intervals between the peripheral cutting edges 6 become regular intervals as described above and the intervals between the wall faces 4a of the chip discharge grooves 4 that face in the rotational direction T of the end mill and the coolant holes 10 located on the backward side thereof in the rotational direction T of the end mill becomes equal to each other, even if the intervals between the openings of the respective coolant holes 10 opening to the tip of the end mill body 1 and the end cutting edges 9 located on the forward sides thereof in the rotational direction T of the end mill are different from each other as in the present embodiment, the thicknesses t between the coolant holes 10 and the wall faces 4a and 4b of the chip discharge grooves 4 located on the forward side thereof in the rotational direction T of the end mill and the backward side thereof in the rotational direction T of the end mill can be made equal to each other, in the cut and raised portions of the chip discharge grooves 4, and the intervals between the coolant holes 10 can also be made equal to each other.

For this reason, breakage caused by an excessive load can be reliably prevented by ensuring sufficient rigidity for the end mill body 1 in the cut and raised portion of the chip discharge groove 4 of the rear end of the cutting edge part 3, while bringing the opening of the first coolant hole 10A close to the second gash 7B as described above at the tip of the end mill body 1 to achieve chip discharge by the efficient supply of a coolant. Moreover, in the present embodiment, the plurality of chip discharge grooves 4 are also equally formed at regular intervals in the circumferential direction in the cut and raised portions. Thus, excellent chip discharge performance can be obtained in conjunction with achievement of balance between the amounts of cutting.

Here, in the present embodiment, the thicknesses t between the coolant holes 10 and the wall faces 4a and 4b of the chip discharge grooves 4 located on the forward sides thereof in the rotational direction T of the end mill and the backward sides thereof in the rotational direction T of the end mill in the cut and raised portions of the chip discharge grooves 4 are made equal to each other in this way. However, for example, when the peripheral cutting edges 6 are used up to the maximums of the effective cutting edge lengths thereof, the strength of the cutting edge part 3 on the rear ends of the peripheral cutting edges 6 can be enhanced by making the thicknesses between the coolant holes 10 and the wall faces 4b of the chip discharge grooves 4 on the backward sides thereof in the rotational direction T of the end mill in the cut and raised portions greater than the thicknesses between the coolant holes 10 and the wall faces 4a of the chip discharge grooves 4 on the forward sides thereof in the rotational direction T of the end mill. Additionally, in contrast to this, the thicknesses between the coolant holes 10 and the wall faces 4b in the cut and raised portions may be made smaller than the thicknesses between the coolant holes 10 and the wall faces 4a.

Moreover, in the present embodiment, the first coolant hole 10A opens at the second flank face 8b of the first tip flank face 8A connected to the first end cutting edge 9A. However, the first coolant hole 10A may open over a portion ranging from the second flank face 8b to the wall face 7b that faces the backward side of the second gash 7B in the rotational direction T of the end mill. In such a case, if a large interval between the first end cutting edge 9A and the opening of the first coolant hole 10A can be ensured, the openings of the second coolant hole 10B and the third coolant hole 10C may open only to the second flank face 8b without straddling the first flank face 8a of the second or third tip flank face 8B or 8C.

Additionally, in the present embodiment, the second end cutting edge 9B is a middle end cutting edge and the third end cutting edge 9C is a short end cutting edge. Contrary to this, however, the second end cutting edge 9B may be a short end cutting edge, and the third end cutting edge 9C may be a middle end cutting edge. Additionally, the second and third end cutting edges 9B and 9C may be made to have lengths that are equal to each other. Moreover, in the present embodiment, a case where the invention is applied to a square end mill in which the peripheral cutting edges 6 and the end cutting edges 9 are orthogonal to each other or intersect each other at a slightly acute angle on rotation tracks has been described. However, the invention can also be applied to a radius end mill in which peripheral cutting edges and end cutting edges are connected together via corner cutting edges with a convexly curved shape, such as a 1/4 circular arc, or a ball end mill in which end cutting edges themselves are formed in a convexly curved shape, such as a 1/4 circular arc, on rotation tracks depending on circumstances.

Additionally, in the present embodiment, a case where the invention is applied to a three-cutting-edge end mill has been described. However, if a plurality of chip discharge grooves, a plurality of peripheral cutting edges, a plurality of gashes, a plurality of end cutting edges, and the like are provided, it is also possible to apply the invention to a two-cutting-edge end mill or an end mill having four or more cutting edges. For example, if a four-cutting-edge end mill is provided, long end cutting edges and short end cutting edges may be alternately formed as in the end mill described in PTL 2. However, if the balance between the strength or the like of the cutting edge part 3 cut out by the chip discharge grooves 4, the gashes 7, the coolant holes 10, and the like is taken into consideration, it is suitable to apply the invention to the three-cutting-edge end mill as in the present embodiment.

### Reference Signs List

1: END MILL BODY
2: SHANK PART
3: CUTTING EDGE PART
4: CHIP DISCHARGE GROOVE
4A TO 4C: FIRST TO THIRD CHIP DISCHARGE GROOVES
4a: WALL FACE OF CHIP DISCHARGE GROOVE 4 THAT FACES ROTATIONAL DIRECTION T OF END MILL
4b: WALL FACE OF CHIP DISCHARGE GROOVE 4 THAT FACES BACKWARD SIDE IN ROTATIONAL DIRECTION T OF END MILL
5: PERIPHERAL FLANK FACE
6: PERIPHERAL CUTTING EDGE
6A TO 6C: FIRST TO THIRD PERIPHERAL CUTTING EDGES
7: GASH
7A TO 7C: FIRST TO THIRD GASHES
8: TIP FLANK FACE
8A TO 8C: FIRST TO THIRD TIP FLANK FACES
8a: FIRST FLANK FACE OF TIP FLANK FACE 8
8b: SECOND FLANK FACE OF TIP FLANK FACE 8
9: END CUTTING EDGE
9A: FIRST END CUTTING EDGE (LONG END CUTTING EDGE)
9B: SECOND END CUTTING EDGE (MIDDLE END CUTTING EDGE)
9C: THIRD END CUTTING EDGE (SHORT END CUTTING EDGE)
10: COOLANT HOLE
10A TO 10C: FIRST TO THIRD COOLANT HOLES
0: AXIS OF END MILL BODY 1
T: ROTATIONAL DIRECTION OF END MILL
t: THICKNESS BETWEEN COOLANT HOLE 10 AND WALL FACE 4a OR 4b OF CHIP DISCHARGE GROOVE 4 ON REAR END SIDE OF CUTTING EDGE PART 3

## Claims

1. An end mill with coolant holes,
wherein a tip portion of an end mill body rotated around an axis is a cutting edge part,
wherein a plurality of chip discharge grooves twisted to a backward side in a rotational direction of the end mill toward a rear end side in a direction of the axis are formed at predetermined intervals in a circumferential direction at an outer periphery of the cutting edge part,
wherein peripheral cutting edges are respectively formed at outer-peripheral-side ridge portions of wall faces of the chip discharge grooves that face in the rotational direction of the end mill,
wherein gashes are formed at tip portions of the chip discharge grooves,
wherein end cutting edges extending from tips of the peripheral cutting edges to an inner peripheral side of the end mill body are respectively formed at intersecting ridgeline portions between wall faces of the gashes that face in the rotational direction of the end mill and tip flank faces of the end mill body,
wherein at least one first end cutting edge of the end cutting edges is a long end cutting edge that extends further toward the inner peripheral side of the end mill body than a second end cutting edge adjacent to the backward side of the first end cutting edge in the rotational direction of the end mill,
wherein coolant holes, which extend so as to be twisted in the same direction of the chip discharge grooves and open at the tip of the end mill body, are respectively formed between the chip discharge grooves adjacent to each other in the circumferential direction within the end mill body, and
wherein the interval, in a tip view in the direction of the axis, between the first end cutting edge and an opening of a first coolant hole that opens at the backward side of the first end cutting edge in the rotational direction of the end mill is made greater than the interval, in the tip view in the direction of the axis, between the second end cutting edge and an opening of a second coolant hole that opens at the backward side of the second end cutting edge in the rotational direction of the end mill.

2. The end mill with coolant holes according to Claim 1,
wherein the lead of the first coolant hole is made greater than the lead of the second peripheral cutting edge connected to the second end cutting edge.

3. The end mill with coolant holes according to Claim 1 or 2,
wherein the leads of the plurality of coolant holes are made equal to each other, and are made equal to or greater than the greatest lead among the leads of the plurality of peripheral cutting edges formed at the cutting edge part.

4. The end mill with coolant holes according to any one of Claims 1 to 3,
wherein the circumferential interval between the first end cutting edge, and a third end cutting edge adjacent to a forward side of the first end cutting edge in the rotational direction of the end mill is made smaller than the circumferential interval between the first end cutting edge and the second end cutting edge, and
wherein the lead of the third peripheral cutting edge connected to the third end cutting edge is made greater than the leads of first and second peripheral cutting edges connected to the first and second end cutting edges, respectively.

5. The end mill with coolant holes according to any one of Claims 1 to 4,
wherein the three chip discharge grooves, the three peripheral cutting edges, the three gashes, the three end cutting edge, and the three coolant holes are formed at the cutting edge part.
